# EUROPÄISCHE PATENTSCHRIFT

(11) **EP 2 985 189 B1**
(45) Veröffentlichungstag und Bekanntmachung des Hinweises auf die Patenterteilung: **19.09.2018**
(21) Anmeldenummer: 15001573.3
(22) Anmeldetag: 23.05.2015
(51) Int. Cl.: B60R 16/03

(54) **BORDNETZ FÜR EIN KRAFTFAHRZEUG, INSBESONDERE FÜR EIN NUTZFAHRZEUG**
ELECTRICAL POWER NETWORK FOR A VEHICLE, IN PARTICULAR AN INDUSTRIAL VEHICLE
RÉSEAU DE BORD POUR UN VÉHICULE, EN PARTICULIER VÉHICULE INDUSTRIEL

(30) Priorität: 14.08.2014 DE 102014012154
(43) Veröffentlichungstag der Anmeldung: 17.02.2016
(73) Patentinhaber: MAN Truck & Bus AG, 80995 München (DE)
(72) Erfinder: Kigin, Erdogan, 73760 Ostfildern (DE); Pfau, Stefan, 82377 Penzberg (DE); Kraft, Ferry, 85614 Kirchseeon (DE); Fischer, Detlef, 81245 München (DE)
(74) Vertreter: v. Bezold & Partner Patentanwälte - PartG mbB

(56) Entgegenhaltungen:
- EP-A1- 1 422 803
- WO-A1-02/066293
- WO-A1-2009/047103
- WO-A1-2010/002644
- US-B1- 6 344 985
- US-B1- 6 507 506
- US-B1- 8 004 242

## Beschreibung

Die Erfindung betrifft ein Bordnetz für ein Kraftfahrzeug, insbesondere für ein Nutzfahrzeug, mit einer Schnittstelle zum Anschluss eines Anhängerbordnetzes.

Niederspannungsbordnetze von Nutzfahrzeugen können eine Schnittstelle aufweisen, um das Bordnetz des Nutzfahrzeugs mit einem Bordnetz eines mit dem Nutzfahrzeug gekoppelten Anhängers zu verbinden. Beispielsweise können Stadtbusse mit einem sogenannten Personenanhänger verbunden werden, um die Kapazität der Linien in Stoßzeiten zu erhöhen. Derartige Personenanhänger verfügen über ein eigenes Anhängerbordnetz, um die verschiedenen elektrischen Verbraucher des Personenanhängers, wie beispielsweise Klima- und Heizanlage, Beleuchtungsanlagen etc., mit Strom zu versorgen.

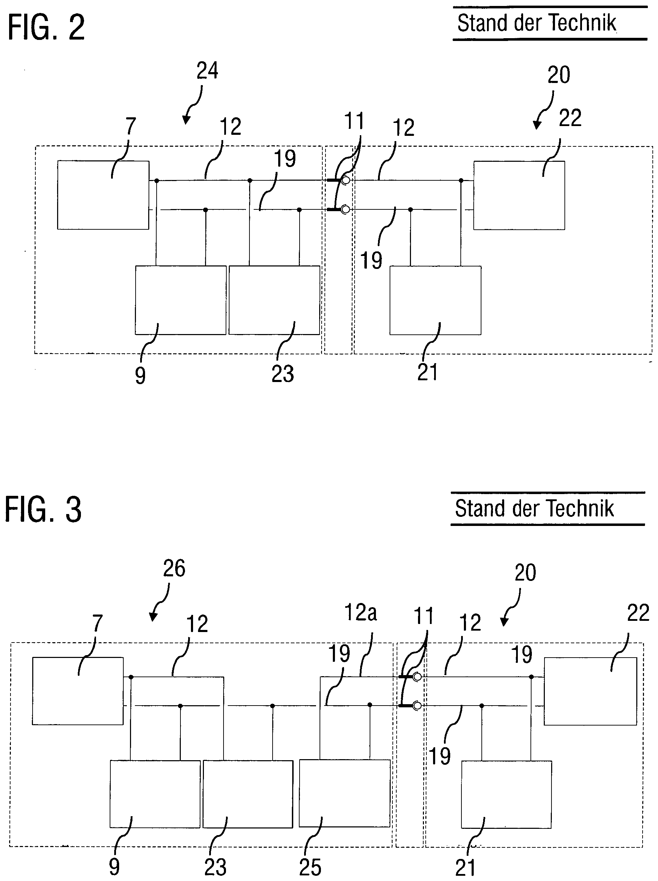

Dies ist beispielhaft anhand der Figur 2 illustriert, die eine typische Bordnetztopologie eines Fahrzeugs mit Anhänger zeigt. Das Fahrzeugbordnetz 24 verfügt über eine Schnittstelle 11 zum Anschließen eines Anhängerbordnetzes 20.

An das Bordnetz 24 des Fahrzeugs sind ein elektrischer Energiespeicher 9, ein Generator 23 (z. B. eine Lichtmaschine) und weitere elektrische Verbraucher 7, die den Lastwiderstand des Bordnetzes 24 bilden, angeschlossenen. Die Verbraucher 7 des Bordnetzes werden in Figur 2 wie auch in den anderen Figuren als ein Lastwiderstand dargestellt. Die Verbraucher 7 des Bordnetzes 24 sind über eine Versorgungsleitung 12 und eine massegebundene Leitung 19 mit dem Energiespeicher 9 und dem Generator 23 parallel verbunden.

Das Anhängerbordnetz 20 verfügt wiederum über einen oder mehrere elektrische Verbraucher 22 und kann optional auch über einen elektrischen Energiespeicher 21 verfügen. Über die Schnittstelle 11 kann somit das Anhängerbordnetz 20 mit dem Fahrzeugbordnetz 24 elektrisch verbunden werden. Neben den Anschlüssen für eine elektrische Versorgungsleitung 12 und eine massegebundene Leitung 19 kann die Schnittstelle 11 ferner Anschlüsse für weitere Signalleitungen aufweisen, um die einzelnen Verbraucher im Anhänger zu steuern. Zur Vereinfachung der Darstellung sind in Figur 2 diese Signalleitungen nicht dargestellt.

Figur 3 zeigt ein weiteres aus dem Stand der Technik bekanntes Fahrzeugbordnetz 26, das mit einem Anhängerbordnetz 20 koppelbar ist. Das Anhängerbordnetz 26 unterscheidet sich von dem Anhängerbordnetz der Figur 2 im Wesentlichen dadurch, dass im Fahrzeugbordnetz 26 ein separater Generator 25, z. B. in Form einer weiteren Lichtmaschine, vorgesehen ist, über den das Anhängerbordnetz 20 direkt versorgbar ist. Gemäß dieser Ausführungsvariante wird die Bordnetz-Anhängerschnittstelle 11 direkt über eine Versorgungsleitung 12a von dem zusätzlichen Generator 25 versorgt. Dadurch kann eine ausgeglichene Ladebilanz gewährleistet werden.

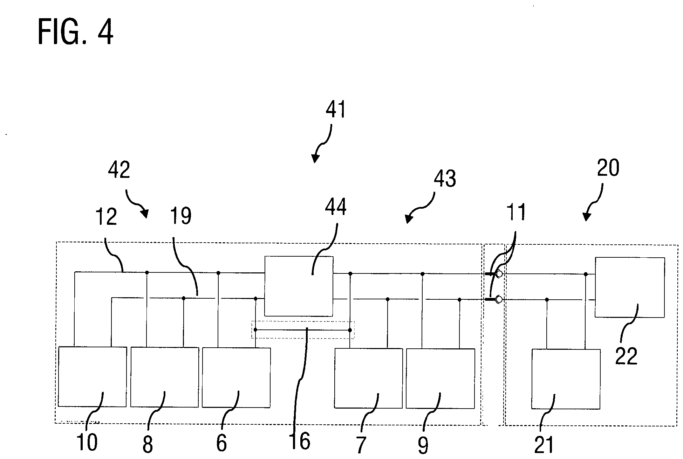

Aus dem Stand der Technik sind ferner Fahrzeugbordnetze bekannt, bei denen das Fahrzeugbordnetz aus mehreren Niederspannungs-Teilbordnetzen gebildet wird, die über einen Gleichspannungswandler miteinander gekoppelt werden. Figur 4 illustriert die Topologie eines derartigen Fahrzeugbordnetzes 41. Das erste Niederspannungs-Teilnetz 43 umfasst wiederum einen Energiespeicher 9 und mehrere elektrische Verbraucher 7, die den Lastwiderstand des Bordnetzes 43 bilden. An dem ersten Teilnetz kann beispielsweise eine Nennspannung von 24 Volt anliegen. Ferner ist ein zweites Teilbordnetz 42 vorgesehen, an dem beispielsweise eine Nennspannung von 48 Volt anliegt und in dem ein Generator 10, beispielsweise ein Starter-Generator, ein zweiter Energiespeicher 8 und optional ein oder mehrere Verbraucher 6, vorzugsweise Hochleistungsverbraucher, angeordnet sind. Das zweite Teilnetz 42 ist über einen Gleichspannungswandler (DC/DC-Wandler) 44 mit dem ersten Teilnetz 43 gekoppelt, so dass das erste Teilnetz 43 mit Energie aus dem zweitem Teilnetz 42 über den Gleichspannungswandler 44 versorgt werden kann.

Ferner kann optional eine diskrete Verbindung 16 der Massen der beiden Teilnetze zur Ausbildung einer Massenverbindung vorgesehen sein. Es wird betont, dass diese diskrete Verbindung zur Massenkopplung der beiden Teilnetze auch durch den Gleichspannungswandler 44 erfolgen kann.

Zur Ankopplung eines Anhängerbordnetzes wäre es nun denkbar, an dem Fahrzeugbordnetz 41 im ersten Teilnetz 43 wiederum die bekannte Schnittstelle 11 zur Ankopplung des Anhängerbordnetzes 20 vorzusehen, um das bekannte Bordnetz 41 für den Anhängerbetrieb zu erweitern.

Nachteilig an einer derartigen Bordnetztopologie ist jedoch die dadurch resultierende erhöhte Lastanforderung an den Gleichspannungswandler 44, dessen Auslegung entsprechend angepasst werden muss. Ein weiterer Nachteil ist, dass die zusätzliche Last des Anhängerbordnetzes 20 nur indirekt durch erhöhten Leistungsbedarf aus dem Teilnetz 43 erkennbar ist. Es ist ferner nachteilig, dass keine Priorisierung in Bezug auf eine Energieversorgung durch das zweite Teilnetz 42 von dem Fahrzeugbordnetz 43 und dem Anhängerbordnetz 20 möglich ist, außer es werden zusätzliche Schaltelemente in das System implementiert. Schließlich kann der Zustand des Anhängerbordnetzes 20, beispielsweise ein Ladezustand der Batterie 21 oder der Leistungsbedarf, nur durch zusätzliches Einbringen weiterer Messstellen, beispielsweise Spannungs- und Strommessstellen, an der Batterie 21 des Anhängers erkannt werden.

Es ist somit eine Aufgabe der Erfindung, ein verbessertes Bordnetz für ein Fahrzeug, insbesondere für ein Nutzfahrzeug bereitzustellen, das mit einem Anhängerbordnetz verbindbar ist und mit dem Nachteile herkömmlicher Techniken vermieden werden können. Die Aufgabe der Erfindung ist es insbesondere, ein Fahrzeugbordnetz mit wenigstens zwei über einen Spannungswandler gekoppelten Teilbordnetzen bereitzustellen, an dem ein Anhängerbordnetz anschließbar ist und mit dem eine kontrollierte Leistungsverteilung und damit z. B. eine Priorisierung zwischen dem Fahrzeug- und dem Anhängerbordnetz ermöglicht wird.

Diese Aufgaben werden durch ein Bordnetz für ein Fahrzeug mit den Merkmalen des Hauptanspruchs gelöst. Vorteilhafte Ausführungen und Anwendungen der Erfindung sind Gegenstand der abhängigen Ansprüche und werden in der folgenden Beschreibung unter teilweiser Bezugnahme auf die Figuren näher erläutert.

Das erfindungsgemäße Bordnetz für ein Kraftfahrzeug, insbesondere für ein Nutzfahrzeug, weist in Übereinstimmung mit dem Stand der Technik eine Schnittstelle zum Anschluss eines Anhängerbordnetzes auf. Das Bordnetz weist ferner ein erstes Teilnetz auf, in dem eine erste Nennspannung anliegt, und umfasst einen ersten Energiespeicher und einen ersten, durch mehrere Verbraucher gebildeten Lastwiderstand. Das Bordnetz weist ferner ein zweites Teilnetz auf, in dem eine zweite Nennspannung anliegt, und umfasst einen Generator und einen zweiten Energiespeicher. Das erste und das zweite Teilnetz sind über einen ersten Spannungswandler miteinander gekoppelt. Die zweite Nennspannung ist vorzugsweise höher als die erste Nennspannung. Im Rahmen der Erfindung besteht jedoch die Möglichkeit, dass die zweite Nennspannung die gleiche ist wie die erste Nennspannung, beispielsweise um zwei 24V-Bordnetze miteinander zu koppeln.

Gemäß allgemeinen Gesichtspunkten der Erfindung ist ferner ein zweiter Spannungswandler vorgesehen, wobei die Schnittstelle zum Anschluss des Anhängerbordnetzes über den zweiten Spannungswandler mit dem zweiten Teilnetz gekoppelt ist. Bei der Schnittstelle zum Anschluss des Anhängerbordnetzes handelt es sich insbesondere um eine Schnittstelle zur Versorgung des Anhängerbordnetzes mit elektrischer Energie, d. h. zur Versorgung des Anhängerbordnetzes mit Spannung und Strom.

Der Spannungswandler ist insbesondere als gesteuerter oder geregelter Spannungswandler ausgeführt. Der erste Spannungswandler und der zweite Spannungswandler können als Gleichspannungswandler (DC/DC-Wandler) ausgeführt sein.

Erfindungsgemäß wird somit das Anhängerbordnetz über die Anhänger-Schnittstelle über einen eigenen Spannungswandler aus dem den Generator aufweisenden Teilbordnetz versorgt. Dadurch ergibt sich der Vorteil, dass durch den Einsatz des zusätzlichen zweiten Spannungswandlers eine kontrollierte Leistungsverteilung und damit beispielsweise eine Priorisierung zwischen dem Fahrzeug- und dem Anhängerbordnetz in Bezug auf eine Energieversorgung aus dem zweiten Teilnetz ermöglicht wird. Ferner kann eine herkömmliche Schnittstelle zum Anschluss eines Anhängerbordnetzes mit der erfindungsgemäßen Fahrzeugbordnetztopologie verwendet werden, so dass herkömmliche Anhängerbordnetze sowohl mit herkömmlichen Fahrzeugbordnetzen als auch mit dem erfindungsgemäßen Bordnetz verbindbar und betreibbar sind. Ein weiterer Vorteil der vorgeschlagenen Bordnetztopologie ist, dass Störeinflüsse, beispielsweise Stromrippel oder Spannungseinbrüche, sich nicht vom Anhängerbordnetz auf das Fahrzeugbordnetz ausbreiten können und vice versa.

Der Generator und der zweite Energiespeicher des zweiten Teilnetzes sowie die mit dem zweiten Teilnetz verbundene Seite des ersten Spannungswandlers und die mit dem zweiten Teilnetz verbundene Seite des zweiten Spannungswandlers können parallel geschaltet sein, so dass je nach Ansteuerung der Spannungswandler wahlweise Energie aus dem zweiten Teilnetz in das erste Teilnetz und/oder das Anhängerbordnetz transferiert werden kann.

Gemäß einer bevorzugten Ausgestaltungsform der Erfindung sind der erste Spannungswandler und der zweite Spannungswandler ausgelegt, eine anliegende Eingangsspannung des zweiten Teilnetzes jeweils auf die gleiche Ausgangsspannung zu wandeln. Ferner können der erste Spannungswandler und der zweite Spannungswandler baugleich ausgeführt sein.

Ein besonderer Vorzug der erfindungsgemäßen Fahrzeugbordnetztopologie liegt somit darin, dass der Gleichspannungswandler, der in einem Fahrzeugbordnetz ohne Anhängerschnittstelle eingesetzt wird, für den Betrieb eines entsprechenden Bordnetzes mit Anhängerschnittstelle nicht angepasst werden muss, sondern lediglich ein zusätzlicher Gleichspannungswandler gleicher Bauart eingesetzt werden kann, so dass ein hoher Anteil an Gleichteilen ermöglicht wird.

Eine Möglichkeit der erfindungsgemäßen Realisierung sieht ferner vor, dass das erste und das zweite Teilnetz massegebunden bzw. massegekoppelt sind. Im Rahmen der Erfindung besteht jedoch auch die Möglichkeit, dass das zweite Teilnetz nicht als Niederspannungs-Bordteilnetz, sondern als Hochspannungsnetz (Nennspannung größer 60V_{DC}) eines Hybrid- oder Elektrofahrzeugs ausgebildet ist und/oder dass die beiden Teilnetze galvanisch voneinander getrennt sind.

Ferner kann eine Steuereinrichtung vorgesehen sein, um den Betrieb des ersten Spannungswandlers und des zweiten Spannungswandlers zu steuern. Eine Möglichkeit der erfindungsgemäßen Realisierung sieht hierbei insbesondere vor, dass eine derartige Steuereinrichtung eingerichtet ist, die ersten und zweiten Gleichspannungswandler derart anzusteuern, dass Energie von einem im Anhängerbordnetz angeordneten Energiespeicher über das zweite Teilnetz in das erste Teilnetz transferiert wird, falls ein Ladezustand des Energiespeichers im ersten Teilnetz unter einen vorbestimmten Schwellenwert fällt.

Damit kann ein gesteuerter oder geregelter Energietransfer zwischen dem Anhängerbordnetz und den beiden Fahrzeug-Teilbordnetzen stattfinden, so dass beispielsweise ein Anhänger dem Fahrzeug Starthilfe gewähren kann.

Ferner kann die Steuereinrichtung eingerichtet sein, die ersten und zweiten Gleichspannungswandler derart anzusteuern, dass Energie von einem im Fahrzeugbordnetz angeordneten Energiespeicher über den zweiten Spannungswandler in das Anhängerbordnetz transferiert wird, falls ein Ladezustand des Energiespeichers im Anhängerbordnetz unter einen vorbestimmten Schwellenwert fällt, so dass mittels des Fahrzeugbordnetzes der Anhänger-Energiespeicher gezielt geladen und entladen werden kann.

Gemäß einer weiteren bevorzugten Ausführungsform kann der zweite Spannungswandler an seiner der Anhängerschnittstelle zugewandten Ausgangsseite Mittel zur Spannungs- und/oder Strommessung umfassen. Dies bietet den Vorteil, dass es ohne Einsatz zusätzlicher im Anhängerbordnetz vorhandener Messstellen möglich ist, den (Lade-)Zustand des Energiespeichers im Anhängerbordnetz zu erkennen und in Abhängigkeit von dem erfassten Zustand einen Energietransfer zwischen dem Anhängerbordnetz und dem zweiten Teilnetz zu steuern. Die Mittel zur Spannungs- und/oder Strommessung können hierbei direkt ausgangsseitig am zweiten Spannungswandler vorgesehen sein oder in der Leitungsverbindung zwischen dem zweiten Spannungswandler und der Anhängerschnittstelle.

Eine weitere vorteilhafte Ausführungsvariante sieht vor, dass die Steuereinrichtung eingerichtet ist, während einer Stopp-Phase eines Start-Stopp-Betriebs des Fahrzeugs die an der Schnittstelle zum Anschluss des Anhängerbordnetzes anliegende Spannung zu überwachen und einen Fahrzeugstart einzuleiten, falls die überwachte Spannung unter einen vorbestimmten Schwellenwert fällt, um einen Ausfall der Stromversorgung im Anhänger während längerer Standzeiten zu vermeiden.

Gemäß einem weiteren Aspekt der Erfindung kann der Generator im zweiten Teilnetz eine elektrische Maschine sein, die zum Generatorbetrieb bzw. Rekuperationsbetrieb und zum Starten eines Verbrennungsmotors des Kraftfahrzeugs ausgebildet ist. Beispielsweise kann der Generator ein Kurbelwellenstartergenerator sein. Der zweite Energiespeicher kann ein Superkondensatorspeicher oder ein Li-Ionen-Akkumulator sein und ausgebildet sein, von dem Generator erzeugte elektrische Ladung zu speichern. Der erste Spannungswandler und der zweite Spannungswandler können bidirektional ausgeführt sein, so dass ein Energietransfer vom Fahrzeugbordnetz in das Anhängerbordnetz und ein Energietransfer vom Anhängerbordnetz in das Fahrzeugbordnetz ermöglicht werden.

Ein weiterer Aspekt betrifft einen Omnibus, der zur Ankopplung eines Personenanhängers ausgeführt ist und der ein erfindungsgemäßes Bordnetz, wie hierin offenbart, aufweist.

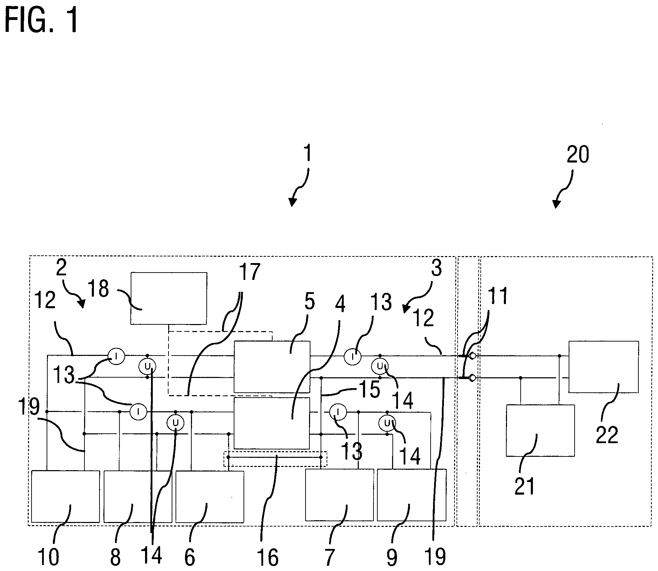

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügte Figur 1 beschrieben. Es zeigen:
- Figur 1: eine Bordnetztopologie eines Nutzfahrzeugs mit einem Anhänger gemäß einer Ausführungsform der Erfindung;
- Figur 2: eine aus dem Stand der Technik bekannte Bordnetztopologie;
- Figur 3: eine aus dem Stand der Technik bekannte Bordnetztopologie; und
- Figur 4: eine weitere Bordnetztopologie.

Figur 1 illustriert schematisch eine Bordnetztopologie eines Fahrzeugverbunds aus einem Omnibus mit einem Personenanhänger. Das Anhängerbordnetz 20 ist dabei in herkömmlicher Weise ausgeführt und umfasst einen elektrischen Energiespeicher und weitere elektrische Verbraucher 22, die den Lastwiderstand des Bordnetzes 20 bilden und die im abgekoppelten Zustand des Anhängers vom Omnibus von dem Energiespeicher 21 versorgbar sind.

Das Bordnetz 1 des Omnibusses umfasst ein erstes Teilnetz 3, in dem eine erste Nennspannung U1, z. B. 24 Volt, anliegt, und das einen ersten Energiespeicher 9 und einen Lastwiderstand 7 umfasst. Der Lastwiderstand 7 ist durch wenigstens einen, vorzugsweise durch mehrere Verbraucher gebildet. Die Verbraucher in dem ersten Teilnetz 3 werden vorzugsweise mit einer konstanten Versorgungsspannung betrieben. Ferner sind im ersten Teilnetz 3 ein Sensor 14 zur Überwachung der Spannung im ersten Teilnetz 3 und ein Sensor 13 zur Überwachung des Stromes im ersten Teilnetz 3 vorgesehen.

Ferner ist ein zweites Teilnetz 2 vorgesehen, in dem eine zweite Netzspannung U2, z. B. 48 Volt, anliegt und in dem ein Generator 10 vorgesehen ist. Im zweiten Teilnetz 2 ist ferner ein weiterer Energiespeicher 8 vorgesehen, der ausgebildet ist, vom Generator 10 erzeugte elektrische Ladung zu speichern. Der Energiespeicher 8 kann beispielsweise als Superkondensatorspeicher ausgebildet sein. Im zweiten Teilnetz 2 können optional ferner ebenfalls ein oder mehrere Verbraucher 6 angeschlossen sein, die vorzugsweise Hochstromverbraucher sind. Im zweiten Teilnetz sind ebenfalls Sensoren 13, 14 zur Strom- und Spannungsmessung vorgesehen.

Die durchgezogenen schwarzen Linien in Figur 1 bezeichnen jeweils die Stromleitungen, mittels derer die einzelnen Komponenten der Bordnetze miteinander verbunden sind. Hierbei bezeichnet 12 die elektrische Versorgungsleitung und das Bezugszeichen 19 die massegebundene Leitung. Das Bordnetz 1 umfasst ferner einen Gleichspannungswandler (DC/DC-Wandler) 4, der das erste Teilnetz 3 mit dem zweiten Teilnetz 2 bidirektional in an sich bekannter Weise koppelt.

Ferner ist ein zweiter Gleichspannungswandler 5 vorgesehen, über den das zweite Teilnetz 2 mit einer Schnittstelle 11 zum Anschluss eines Anhängerbordnetzes 20 verbindbar ist.

Die Schnittstelle 11 ist in an sich bekannter Weise ausgeführt und muss nicht näher beschrieben werden. Über die Schnittstelle 11 kann das Anhängerbordnetz mit Energie aus dem Fahrzeugbordnetz 1 versorgt werden. Die mit dem Bezugszeichen 15 gekennzeichnete Leitung dient zur Massekopplung der massegebundenen Leitungen 19.

Im vorliegenden Ausführungsbeispiel sind die Gleichspannungswandler 4 und 5 baugleich ausgeführt. Der Generator 10, der zweite Energiespeicher 8 sowie die mit dem zweiten Teilnetz 2 verbundene Seite des ersten Spannungswandlers und die mit dem zweiten Teilnetz 2 verbundene Seite des zweiten Spannungswandlers 5 sind parallel geschaltet.

Ein- und ausgangsseitig des zweiten Spannungswandlers 5 sind wiederum Strom- und Spannungssensoren 13, 14 vorgesehen. Die Steuerung des Bordnetzes 1 wird durch eine Steuerung 18 vorgenommen, die über entsprechende Signal- und Messleitungen 17 (sie sind in den Figuren zur Unterscheidung von stromführenden Leitungen gestrichelt dargestellt) mit den entsprechenden Komponenten des Bordnetzes 1 verbunden sind, insbesondere mit dem ersten Spannungswandler 4 und mit dem zweiten Spannungswandler 5. Zur Vereinfachung der Darstellung sind die übrigen Signalleitungen zu den anderen Komponenten des Bordnetzes in Figur 1 nicht eingezeichnet.

Die Steuereinheit 18 ist beispielsweise ausgebildet, die ausgangsseitig am zweiten Spannungswandler 5 anliegende Spannung und den dort fließenden Strom mittels der Sensoren 13 und 14 zu überwachen, wobei unter Ausgangsseite die Seite des zweiten Gleichspannungswandlers 5 verstanden wird, die der Anhängerschnittstelle 11 zugewandt ist. Aus den erfassten Strom- und Spannungsmesswerten kann der Ladezustand des Energiespeichers 21 des Anhängerbordnetzes 20 ermittelt und überwacht werden, falls dieses am Fahrzeugbordnetz 1 über die Schnittstelle 11 angeschlossen ist.

Die Steuereinrichtung 18 ist ferner eingerichtet, die ersten und zweiten Gleichspannungswandler 4, 5 derart anzusteuern, dass Energie vom Energiespeicher 21 des Anhängerbordnetzes 20 über das zweite Teilnetz 2 in das erste Teilnetz 3 transferiert wird, falls ein Ladezustand des Energiespeichers 9 im ersten Teilnetz 3 unter einen vorbestimmten Schwellenwert fällt. Ferner ist die Steuereinrichtung eingerichtet, während einer Stopp-Phase eines Start-Stopp-Betriebs des Fahrzeugs die an der Schnittstelle 11 zum Anschluss des Anhängerbordnetzes 20 anliegende Spannung zu überwachen und einen Fahrzeugstart einzuleiten, falls die überwachte Spannung unter einen vorbestimmten Schwellenwert fällt.

Ferner ist in Figur 1 eine diskrete Verbindung 16 der Massen der beiden Teilnetze 2, 3 dargestellt, die eine niederohmige Verbindung zwischen den beiden Teilnetzen zur Ausbildung der Masseverbindung der beiden Teilnetze ermöglicht. Die gestrichelte Linie um die Verbindungsleitung 16 soll anzeigen, dass diese Leitung optional ist, da eine derartige Verbindung auch direkt über den DC/DC-Wandler realisiert werden kann.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Zusätzlich können viele Modifikationen ausgeführt werden, ohne den zugehörigen Bereich zu verlassen. Folglich soll die Erfindung nicht auf die offenbarten Ausführungsbeispiele begrenzt sein, sondern die Erfindung soll alle Ausführungsbeispiele umfassen, die in den Bereich der beigefügten Patentansprüche fallen.

### Bezugszeichen liste

- 1: Fahrzeugbordnetz
- 2, 3: Teilbordnetze des Fahrzeugbordnetzes
- 4, 5: Spannungswandler
- 6: Verbraucher im zweiten Teilnetz
- 7: Verbraucher im ersten Teilnetz
- 8, 9: Energiespeicher
- 10: Generator
- 11: Anhängerschnittstelle
- 12, 12a: Versorgungsleitung
- 13: Stromsensor
- 14: Spannungssensor
- 15: Masseleitung
- 16: Verbindungsleitung der Massen
- 17: Signalleitungen
- 18: Steuereinrichtung
- 19: Massegebundene Leitung
- 20: Anhängerbordnetz
- 21: Energiespeicher
- 22: Verbraucher im Anhängerbordnetz
- 23: Generator (Lichtmaschine)
- 24: Fahrzeugbordnetz
- 25: Generator (Lichtmaschine)
- 26, 41: Fahrzeugbordnetz
- 42, 43: Teilnetze des Fahrzeugbordnetzes
- 44: Gleichspannungswandler

## Patentansprüche

1. Bordnetz (1) für ein Kraftfahrzeug, insbesondere für ein Nutzfahrzeug, aufweisend
eine Schnittstelle (11) zum Anschluss eines Anhängerbordnetzes (20);
ein erstes Teilnetz (3), in dem eine erste Nennspannung anliegt, umfassend einen ersten Energiespeicher (9) und einen ersten, durch mehrere Verbraucher gebildeten Lastwiderstand (7);
ein zweites Teilnetz (2), in dem eine zweite Nennspannung anliegt, umfassend einen Generator (10) und einen zweiten Energiespeicher (8);
wobei das erste und das zweite Teilnetz (3, 2) über einen ersten Spannungswandler (4) miteinander gekoppelt sind; und
wobei die Schnittstelle (11) zum Anschluss des Anhängerbordnetzes (20) über einen zweiten Spannungswandler (5) mit dem zweiten Teilnetz (2) gekoppelt ist.

2. Bordnetz (1) nach Anspruch 1, **dadurch gekennzeichnet, dass** der Generator (10) und der zweite Energiespeicher (8) des zweiten Teilnetzes (2) sowie die mit dem zweiten Teilnetz (2) verbundene Seite des ersten Spannungswandlers (4) und die mit dem zweiten Teilnetz (2) verbundene Seite des zweiten Spannungswandlers (5) parallel geschaltet sind.

3. Bordnetz (1) nach Anspruch 1 oder 2, **dadurch gekennzeichnet, dass** der erste Spannungswandler (4) und der zweite Spannungswandler (5) als Gleichspannungswandler ausgeführt sind.

4. Bordnetz (1) nach einem der vorhergehenden Ansprüche, **dadurch gekennzeichnet,**
(a) **dass** der erste Spannungswandler (4) und der zweite Spannungswandler (5) ausgeführt sind, eine anliegende Eingangsspannung des zweiten Teilnetzes (2) auf die gleiche Ausgangsspannung zu wandeln; und/oder
(b) **dass** der erste Spannungswandler (4) und der zweite Spannungswandler (5) baugleich ausgeführt sind.

5. Bordnetz (1) nach einem der vorhergehenden Ansprüche, **dadurch gekennzeichnet, dass** das erste und das zweite Teilnetz (2, 3) massegebunden sind.

6. Bordnetz (1) nach einem der vorhergehenden Ansprüche, **dadurch gekennzeichnet, dass** der zweite Spannungswandler (5) an seiner der Anhängerschnittstelle (11) zugewandten Ausgangsseite Mittel zur Spannungs- und Strommessung umfasst.

7. Bordnetz (1) nach einem der vorhergehenden Ansprüche, **gekennzeichnet durch** eine Steuereinrichtung (18), die eingerichtet ist, die ersten und zweiten Spannungswandler (4, 5) derart anzusteuern, dass Energie von einem im Anhängerbordnetz (20) angeordneten Energiespeicher (21) über das zweite Teilnetz (2) in das erste Teilnetz (3) transferiert wird, falls ein Ladezustand des Energiespeichers (9) im ersten Teilnetz (3) unter einen vorbestimmten Schwellenwert fällt.

8. Bordnetz (1) nach einem der vorhergehenden Ansprüche, **gekennzeichnet durch** eine Steuereinrichtung (18), die eingerichtet ist, während einer Stopp-Phase eines Start-Stopp-Betriebs des Fahrzeugs die an der Schnittstelle (11) zum Anschluss des Anhängerbordnetzes (20) anliegende Spannung zu überwachen und einen Fahrzeugstart einzuleiten, falls die überwachte Spannung unter einen vorbestimmten Schwellenwert fällt.

9. Bordnetz (1) nach einem der vorhergehenden Ansprüche, **dadurch gekennzeichnet,**
(a) **dass** der Generator (10) eine elektrischen Maschine ist, die zum Generatorbetrieb bzw. Rekuperationsbetrieb und zum Starten eines Verbrennungsmotors des Kraftfahrzeugs ausgebildet ist; und/oder
(b) **dass** der Generator (10) ein Kurbelwellenstartergenerator ist; und/oder
(c) **dass** der zweite Energiespeicher (8), vorzugsweise ein Superkondensatorspeicher oder Li-Ionen-Akkumulator, ausgebildet ist, von dem Generator (10) erzeugte elektrische Ladung zu speichern; und/oder
(d) **dass** der erste Spannungswandler (4) und der zweite Spannungswandler (5) bidirektional ausgeführt sind; und/oder
(e) **dass** die zweite Nennspannung höher als die erste Nennspannung ist.

10. Omnibus, der zur Ankupplung eines Personenanhängers ausgeführt ist, umfassend ein Bordnetz (1) nach einem der vorhergehenden Ansprüche.

## Claims

1. An on-board power system (1) for a motor vehicle, in particular for a utility vehicle, having
an interface (11) for connecting a trailer on-board power system (20);
a first partial power system (3) in which a first rated voltage is applied, comprising a first energy store (9) and a first load resistor (7) which is formed by multiple consumers;
a second partial power system (2) in which a second rated voltage is applied, comprising a generator (10) and a second energy store (8);
wherein the first and second partial power systems (3, 2) are coupled to one another via a first voltage transformer (4); and
wherein the interface (11) for connecting the trailer on-board system (20) is coupled to the second partial power system (2) via a second voltage transformer (5) .

2. The on-board power system (1) according to Claim 1, **characterized in that** the generator (10) and the second energy store (8) of the second partial power system (2) as well as the side of the first voltage transformer (4) which is connected to the second partial power system (2) and the side of the second voltage transformer (5) which is connected to the second partial power system (2) are connected in parallel.

3. The on-board power system (1) according to Claim 1 or 2, **characterized in that** the first voltage transformer (4) and the second voltage transformer (5) are embodied as DC voltage transformers.

4. The on-board power system (1) according to one of the preceding claims, **characterized**
(a) **in that** the first voltage transformer (4) and the second voltage transformer (5) are designed to convert an applied input voltage of the second partial power system (2) to the same output voltage; and/or
(b) **in that** the first voltage transformer (4) and the second voltage transformer (5) are embodied in an identical design.

5. The on-board power system (1) according to one of the preceding claims, **characterized in that** the first and second power systems (2, 3) are connected to earth.

6. The on-board power system (1) according to one of the preceding claims, **characterized in that** the second voltage transformer (5) comprises means for measuring voltage and current at its output side facing the trailer interface (11).

7. The on-board power system (1) according to one of the preceding claims, **characterized by** a control device (18) which is configured to actuate the first and second voltage transformers (4, 5) in such a way that energy is transferred from an energy store (21) arranged in the trailer on-board power system (20) into the first partial power system (3) via the second partial power system (2) if a state of charge of the energy store (9) in the first partial power system (3) drops below a predetermined threshold value.

8. The on-board power system (1) according to one of the preceding claims, **characterized by** a control device (18) which is configured to monitor, during a stop phase of a start/stop operation of the vehicle, the voltage which is applied to the interface (11) for connecting the trailer on-board power system (20), and to initiate a vehicle start if the monitored voltage drops below a predetermined threshold value.

9. The on-board power system (1) according to one of the preceding claims, **characterized**
(a) **in that** the generator (10) is an electric machine which is designed for generator operation or recuperation operation and for starting an internal combustion engine of the motor vehicle; and/or
(b) **in that** the generator (10) is a crankshaft starter generator; and/or
(c) **in that** the second energy store (8), preferably a super-capacitor store or Li-ion accumulator, is designed to store electrical charge generated by the generator (10); and/or
(d) **in that** the first voltage transformer (4) and the second voltage transformer (5) are embodied bidirectionally; and/or
(e) **in that** the second rated voltage is higher than the first rated voltage.

10. A bus which is designed for the coupling of a people-carrying trailer, comprising an on-board power system (1) according to one of the preceding claims.

## Revendications

1. Réseau de bord (1) pour un véhicule automobile, notamment pour un véhicule utilitaire, comprenant une interface (11) destinée au raccordement d'un réseau de bord de remorque (20) ;
un premier réseau partiel (3) dans lequel est présente une première tension de réseau, comprenant un premier accumulateur d'énergie (9) et une première résistance de charge (7) formée par plusieurs récepteurs ;
un deuxième réseau partiel (2) dans lequel est présente une deuxième tension de réseau, comprenant un générateur (10) et un deuxième accumulateur d'énergie (8) ;
le premier et le deuxième réseau partiel (3, 2) étant connectés l'un à l'autre par le biais d'un premier convertisseur de tension (4) ; et
l'interface (11) destinée au raccordement d'un réseau de bord de remorque (20) étant connectée au deuxième réseau partiel (2) par le biais d'un deuxième convertisseur de tension (5).

2. Réseau de bord (1) selon la revendication 1, **caractérisé en ce que** le générateur (10) et le deuxième accumulateur d'énergie (8) du deuxième réseau partiel (2) ainsi que le côté du premier convertisseur de tension (4) relié au deuxième réseau partiel (2) et le côté du deuxième convertisseur de tension (5) relié au deuxième réseau partiel (2) sont branchés en parallèle.

3. Réseau de bord (1) selon la revendication 1 ou 2, **caractérisé en ce que** le premier convertisseur de tension (4) et le deuxième convertisseur de tension (5) sont réalisés sous la forme de convertisseurs de tension continue.

4. Réseau de bord (1) selon l'une des revendications précédentes, caractérisé en ce (a) que le premier convertisseur de tension (4) et le deuxième convertisseur de tension (5) sont conçus pour convertir une tension d'entrée présente du deuxième réseau partiel (2) en la même tension de sortie ; et/ou (b) que le premier convertisseur de tension (4) et le deuxième convertisseur de tension (5) sont construits à l'identique.

5. Réseau de bord (1) selon l'une des revendications précédentes, **caractérisé en ce que** le premier et le deuxième réseau partiel (2, 3) sont reliés à la masse.

6. Réseau de bord (1) selon l'une des revendications précédentes, **caractérisé en ce que** le deuxième convertisseur de tension (5) comporte, sur son côté de sortie faisant face à l'interface de remorque (11), des moyens de mesure de la tension et du courant.

7. Réseau de bord (1) selon l'une des revendications précédentes, **caractérisé par** un dispositif de commande (18) qui est conçu pour commander le premier et le deuxième convertisseur de tension (4, 5) de telle sorte que de l'énergie est transférée d'un accumulateur d'énergie (21) disposé dans le réseau de bord de remorque (20) dans le premier réseau partiel (3) par le biais du deuxième réseau partiel (2) dans le cas où un état de charge de l'accumulateur d'énergie (9) dans le premier réseau partiel (3) chute au-dessous d'une valeur de seuil prédéfinie.

8. Réseau de bord (1) selon l'une des revendications précédentes, **caractérisé par** un dispositif de commande (18) qui est conçu pour surveiller la tension présente au niveau de l'interface (11) destinée au raccordement d'un réseau de bord de remorque (20) pendant une phase d'arrêt d'un fonctionnement en mode démarrage-arrêt du véhicule et initier un démarrage du véhicule dans le cas où la tension surveillée chute au-dessous d'une valeur de seuil prédéfinie.

9. Réseau de bord (1) selon l'une des revendications précédentes, **caractérisé en ce**
(a) **que** le générateur (10) est une machine électrique qui est configurée pour le fonctionnement en générateur ou le fonctionnement en récupération et pour démarrer un moteur à combustion interne du véhicule automobile ; et/ou
(b) **que** le générateur (10) est un générateur de démarrage à vilebrequin ; et/ou
(c) **que** le deuxième accumulateur d'énergie (8), de préférence un accumulateur à supercondensateur ou un accumulateur aux ions de lithium, est configuré pour accumuler la charge électrique générée par le générateur (10) ; et/ou
(d) **que** le premier convertisseur de tension (4) et le deuxième convertisseur de tension (5) sont réalisés bidirectionnels ; et/ou
(e) **que** la deuxième tension de réseau est supérieure à la première tension de réseau.

10. Autobus, qui est conçu pour l'attelage d'une remorque de transport de personnes, comprenant un réseau de bord (1) selon l'une des revendications précédentes.
